# EUROPEAN PATENT APPLICATION

(11) **EP 3 886 028 A1**
(43) Date of publication of application: **29.09.2021**
(21) Application number: 20215616.2
(22) Date of filing: 18.12.2020
(51) Int. Cl.: G06Q 30/02

(54) **INFORMATION COLLECTION APPARATUS AND CONTROL PROGRAM THEREFOR**

(30) Priority: 24.03.2020 JP 2020052613
(71) Applicant: Toshiba TEC Kabushiki Kaisha, Tokyo 141-8562 (JP)
(72) Inventor: Nimiya, Shigeki, Shinagawa-ku, Tokyo 141-8562 (JP)
(74) Representative: Bandpay & Greuter

(57) **Abstract**

An information collection apparatus includes an acquiring unit, an analyzing unit, a detecting unit, and a collecting unit. The acquiring unit acquires identification information of commodities registered by the same customer in a selling floor together with times when the commodities are registered. The recognizing unit recognizes, from the identification information and the registration times of the commodities, registration order of the commodities by the same customer and a required time until the registration. The detecting unit detects, based on the registration order of the commodities by the same customer and the required time until the registration, a commodity having a predetermined attribute. The collecting unit collects information necessary for an attribute analysis for the commodity having the predetermined attribute.

## Description

### FIELD

Embodiments described herein relate generally to an information collection apparatus that collects information necessary for an attribute analysis for a commodity and a control program for causing a computer to function as the information collection apparatus.

### BACKGROUND

In a mass retailer such as a supermarket, a selling floor is divided for each of classifications of commodities. The commodities are displayed in selling floors matching the classifications of the commodities. On the other hand, a customer assumes a classification of a commodity to be purchased and goes to the selling floor of the commodity and searches for the classification of a commodity. Accordingly, if the classification assumed by the customer and the classification determined by the store are different, the customer needs time until the customer finds the commodity. Such a commodity is considered to have an attribute that it is hard for the customer to find the classification of a commodity.

The commodities are not always displayed in one place. For example, seasonings matching vegetables are displayed not only in a seasoning selling floor but also a vegetable selling floor. However, since a space of the vegetable selling floor is limited, the numbers of items of the seasonings are small. Accordingly, it could occur that a customer who acquires a seasoning in the vegetable selling floor goes to the seasoning selling floor, finds another seasoning manufactured by another manufacturer, and changes the seasoning to the other seasoning because the other seasoning is better. Such a commodity is considered to have an attribute that the customer tends to wonder whether to purchase the commodity.

The attributes of such commodities are obtained by analyzing traffic lines of customers. In order to analyze the traffic lines of the customers, for example, it is necessary to dispose many cameras in the store and analyze images of the cameras to capture the traffic lines of the customers. Alternatively, it is necessary to dispose transmitters or receivers of many beacons in the store, attach receivers or transmitters of beacons to shopping carts or shopping baskets, and analyze received signals of the beacons to capture traffic lines of customers. However, all of these methods require initial cost for introducing the cameras or the beacons and running cost. A system for analyzing images and signals is also expensive and cannot be easily introduced.

### DESCRIPTION OF THE DRAWINGS

FIG. 1 is a system configuration diagram in an embodiment;
FIG. 2 is a schematic diagram illustrating data structure of a store transaction file;
FIG. 3 is a block diagram illustrating a main part circuit configuration of an analysis server;
FIG. 4 is a schematic diagram illustrating an example of a selling floor plan specified by map data;
FIG. 5 is a schematic diagram illustrating data structure of a selling floor record;
FIG. 6 is a schematic diagram illustrating data structure of a first attribute record;
FIG. 7 is a schematic diagram illustrating data structure of a second attribute record;
FIG. 8 is a schematic diagram illustrating data structure of a third attribute record;
FIG. 9 is a flowchart illustrating a main part procedure of information processing executed by a processor of the analysis server;
FIG. 10 is a flowchart illustrating a specific procedure of first attribute analysis processing illustrated in FIG. 9;
FIG. 11 is a flowchart illustrating a specific procedure of second attribute analysis processing; and
FIG. 12 is a flowchart illustrating a specific procedure of third attribute analysis processing.

### DETAILED DESCRIPTION

An aspect of embodiments is to provide an information collection apparatus that can collect, without cost for a system, information necessary for an attribute analysis for a commodity having attributes that it is hard for a customer to find the commodity and the customer tends to wonder whether to purchase the commodity and a control program for the information collection apparatus.

In an embodiment, an information collection apparatus includes an acquiring unit, an analyzing unit, a detecting unit (detector), and a collecting unit. The acquiring unit acquires identification information of commodities registered by a same customer in a selling floor together with times when the commodities are registered. The recognizing unit recognizes, from the identification information and the registration times of the commodities, registration order of the commodities by the same customer and a required time until the registration. The detecting unit detects, based on the registration order of the commodities by the same customer and the required time until the registration, a commodity having a predetermined attribute. The collecting unit collects information necessary for an attribute analysis for the commodity having the predetermined attribute.

Preferably, the detector detects, as the commodity having the predetermined attribute, a commodity registered exceeding a predetermined time after an immediately preceding commodity is registered.

The information collection apparatus may further comprise a specifying unit configured to specify allocation in the selling floor of a commodity.

Preferably, if the location of the selling floor of the commodity registered exceeding the predetermined time is different from a location of the selling floor of the immediately preceding commodity, the detector detects the commodity as the commodity having the predetermined attribute.

The information collection apparatus may further comprise a specifying unit configured to specify allocation of the selling floor of a commodity.

Preferably, the detector detects, as the commodity having the predetermined attribute, a commodity registered exceeding a predetermined time after a commodity in the location of the selling floor is registered.

Preferably, the acquiring unit further acquires identification information of a commodity returned to the selling floor together with a time when the commodity is returned.

Preferably, the detector detects, as the commodity having the predetermined attribute, a commodity returned exceeding a predetermined time after the commodity is registered by the customer.

Preferably, the identification information comprises one or more of a commodity ID, a unit price, and a number of returned items.

The detector may not be a camera.

The present invention further relates to an information collection method, comprising the following steps:
acquiring identification information of commodities registered by a customer in a selling floor and times when the commodities are registered;
recognizing, from the identification information and the registration times of the acquired commodities by acquiring, a registration order of the commodities by the customer and a required time until a registration;
detecting, based on the recognized registration order of the commodities by the customer and the recognized required time until the registration, a commodity having a predetermined attribute; and
collecting information necessary for an attribute analysis for the detected commodity by detecting.

The information collection method may further comprise a step of detecting, as the commodity having the predetermined attribute, a commodity registered exceeding a predetermined time after an immediately preceding commodity is registered.

The information collection method may further comprise a step of specifying allocation in the selling floor of a commodity. In this case, if the location of the selling floor of the commodity registered exceeding the predetermined time is different from a location of the selling floor of the immediately preceding commodity, detecting the commodity as the commodity having the predetermined attribute.

The information collection method may further comprise specifying allocation of the selling floor of a commodity; and detecting, as the commodity having the predetermined attribute, a commodity registered exceeding a predetermined time after a commodity in the location of the selling floor is registered.

The information collection method may further comprise a step of acquiring identification information of a commodity returned to the selling floor together with a time when the commodity is returned.

The information collection method may further comprise a step of detecting, as the commodity having the predetermined attribute, a commodity returned exceeding a predetermined time after the commodity is registered by the customer.

Preferably, the identification information comprises one or more of a commodity ID, a unit price, and a number of returned items.

The present invention further relates to an information collection system, comprising: a memory that stores functional components; and a processor that executes the functional components stored in the memory, wherein the functional components comprise: an acquiring unit configured to acquire identification information of commodities registered by a customer in a selling floor and times when the commodities are registered; a recognizing unit configured to recognize, from the identification information and the registration times of the commodities acquired by the acquiring unit, a registration order of the commodities by the customer and a required time until a registration; a detector configured to detect, based on the registration order of the commodities by the customer and the required time until the registration recognized by the recognizing unit, a commodity having a predetermined attribute; and a collecting unit configured to collect information necessary for an attribute analysis for the commodity detected by the detector.

Preferably, the detector detects, as the commodity having the predetermined attribute, a commodity registered exceeding a predetermined time after an immediately preceding commodity is registered.

The information collection system may further comprise: a specifying unit configured to specify allocation in the selling floor of a commodity, wherein if the location of the selling floor of the commodity registered exceeding the predetermined time is different from a location of the selling floor of the immediately preceding commodity, the detector detects the commodity as the commodity having the predetermined attribute.

The information collection system may further comprise: a specifying unit configured to specify allocation of the selling floor of a commodity, wherein the detector detects, as the commodity having the predetermined attribute, a commodity registered exceeding a predetermined time after a commodity in the location of the selling floor is registered.

Preferably, the acquiring unit further acquires identification information of a commodity returned to the selling floor together with a time when the commodity is returned, and the detector detects, as the commodity having the predetermined attribute, a commodity returned exceeding a predetermined time after the commodity is registered by the customer.

Preferably, the identification information comprises one or more of a commodity ID, a unit price, and a number of returned items.

The information collection system may be with the proviso that the detector is not a camera.

An embodiment of an information collection apparatus is explained below with reference to the drawings.

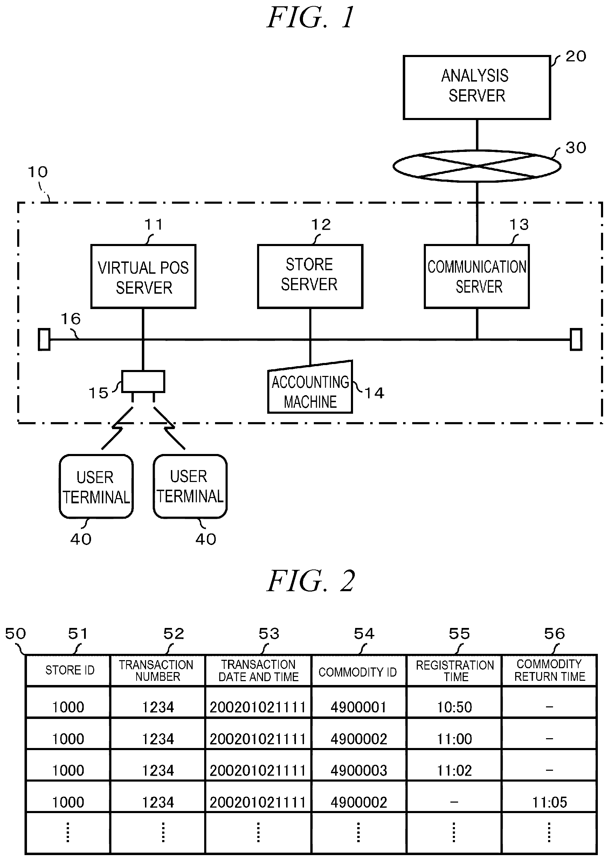

In this embodiment, an information collection function by the information collection apparatus is applied to a store into which a store system 10 (see FIG. 1) for allowing a customer to register purchased commodities by himself or herself in a selling floor is introduced.

FIG. 1 is a system configuration diagram in this embodiment. The system in this embodiment includes a store system 10, an analysis server 20, and a communication network 30. The communication network 30 is, for example, the Internet, an intranet, a WAN (Wide Area Network), or a LAN (Local Area Network). The communication network 30 may include a telephone communication network or a mobile communication network. Alternatively, the communication network 30 may be a combination of the telephone communication network and the mobile communication network. In the information collection system 1, the store system 10 is connected to the analysis server 20 via the communication network 30. The store system 10 connected to the analysis server 20 is not limited to a system of one store. The store systems 10 of a plurality of stores may be connected to the analysis server 20. In this case, the analysis server 20 may be configured as cloud computing.

The system in this embodiment includes user terminals 40. The user terminals 40 are used by customers to register purchased commodities by themselves in the selling floor. The user terminals 40 are portable communication terminals mounted with cameras capable of scanning barcodes. The user terminals 40 are implemented with an application program for notifying, from data of barcodes scanned by the cameras, notifying commodities attached with the barcodes as purchased commodities or returned commodities. Therefore, smartphones, tablet terminals, or the like carried by the customers can be applied as the user terminals 40.

The store system 10 includes a virtual POS server 11, a store server 12, a communication server 13, an accounting machine 14, an access point 15, and a communication line 16. The communication line 16 is, for example, a LAN (Local Area Network). The LAN may be a wired LAN or may be a wireless LAN. In the store system 10, the virtual POS server 11, the store server 12, the communication server 13, the accounting machine 14, and the access point 15 are respectively connected to the communication line 16.

The access point 15 is a device for constructing a wireless LAN with a plurality of user terminals 40. The access point 15 is a relay point for data exchanged between the user terminals 40 connected to the access point 15 by a wireless LAN and the virtual POS server 11, the store server 12, the communication server 13, or the accounting machine 14 connected to the access point 15 by the communication line 16. The number of access points 15 is not limited to one. Two or more access points 15 may be connected to the communication line 16 considering a size, a layout, and the like of a store.

The virtual POS server 11 cooperates with the user terminals 40 to perform support for showing as if a well-known POS terminal is operating. The virtual POS server 11 forms transaction information files for each of customers who perform self-service registration using the user terminals 40. The virtual POS server 11 stores, in the transaction information files, together with time of a present point in time, commodity sales data such as commodity IDs, unit prices, the numbers of sold items, and sales amounts of commodities notified as purchased commodities from the user terminals 40. In the following explanation, this time is referred to as registration time. The virtual POS server 11 stores, together with time of a present point in time, commodity return data such as commodity IDs, unit prices, the numbers of returned items, and returned commodity amounts of commodities notified as returned commodities from the user terminals 40. In the following explanation, this time is referred to as commodity return time. The commodity IDs are unique codes set for each of the commodities in order to identify the commodities. The virtual POS server 11 outputs the data stored in the transaction information files to the accounting machine 14 as accounting data of the customers, who are users of the user terminals 40 corresponding to the transaction information files. The data of the transaction information files may be directly output from the virtual POS server 11 to the accounting machine 14 or may be output via the store server 12.

The accounting machine 14 is a terminal for settling commercial transactions with the customers. The accounting machine 14 settles the commercial transactions based on the data of the transaction information files. The accounting machines 14 can settle the commercial transactions according to a well-known settlement schemes such as cash settlement, credit card settlement, electronic money settlement, point settlement, or code settlement (called mobile settlement, smartphone settlement, or the like as well). As the accounting machine 14, a self-service or semi-self-service accounting machine well known in the past can be applied.

The store server 12 manages databases such as a commodity database and a member database in order to support all jobs relating to the store. The commodity database is an aggregate of commodity data such as commodity IDs, commodity names, and prices of commodities. The member file is an aggregate of member data such as member IDs and cumulative points of customers registered as point members. The member IDs are unique codes set for each of members in order to identify the members.

The communication server 13 is a server specialized for performing data communication with the analysis server 20 via the communication network 30.

The store system 10 having such a configuration has a function of creating a store transaction file 50 (see FIG. 2) and transmitting the store transaction file 50 to the analysis server 20. This function is realized by the store server 12 cooperating with the virtual POS server 11, the communication server 13, and the accounting machine 14. That is, the store server 12 creates the store transaction file 50 based on a transaction information file of a commercial transaction settled by the accounting machine 14, the transaction information file being created by the virtual POS server 11. The store server 12 transmits the store transaction file 50 to the analysis server 20 via the communication server 13

FIG. 2 is a schematic diagram illustrating data structure of the store transaction file 50. As illustrated in FIG. 2, the store transaction file 50 includes a field 51 of a store ID, a field 52 of a transaction number, a field 53 of a transaction date and time, a field 54 of a commodity ID, a field 55 of registration time, and a field 56 of commodity return time. In the field 51, a unique store ID set for the store is described. In the field 52, a transaction number issued every time a commercial transaction is settled by the accounting machine 14 is described. In the field 53, time when the commercial transaction is settled by the accounting machine 14 is described. In the field 54, a commodity ID of commodity sales data or commodity return data stored in the transaction information file is described. In the field 55, registration time included in the commodity sales data having the commodity ID described in the field 54 is described. In the field 56, commodity return time included in the commodity return data having the commodity ID described in the field 54 is described.

That is, if acquiring commodity sales data from the transaction information file, the store server 12 describes a commodity ID and registration time of the commodity sales data in the field 54 and the field 55 of the store transaction file 50. The store server 12 describes a store ID of the store and a transaction number and a transaction date and time corresponding to the transaction information file in the field 51, the field 52, and the field 53 of the store transaction file 50.

Similarly, if acquiring commodity return data from the transaction information file, the store server 12 describes a commodity ID and commodity return time of the commodity return data in the field 54 and the field 56 of the store transaction file 50. The store server 12 describes the store ID of the store and a transaction number and a transaction date and time corresponding to the transaction information file in the field 51, the field 52, and the field 53 of the store transaction file 50.

Data described in the fields 51 to 56 in the same row are referred to as store transaction records. The store transaction records are saved in the store transaction file 50 in ascending order of transaction date and times under the same transaction number. The store transaction records having the same transaction number are sorted in ascending order of registration times or commodity return times. Serial numbers increasing from "1" in ascending order of saving are given to the store transaction records as record numbers.

The store server 12 performs the processing explained above for, for example, a transaction information file for one day to thereby create the store transaction file 50. The created store transaction file 50 is sent to the communication server 13 via the communication line 16 and transmitted from the communication server 13 to the analysis server 20 via the communication network 30.

Timing when the store server 12 creates the store transaction file 50 is not particularly limited. The store server 12 may create the store transaction file 50 every time a commercial transaction is settled or may create the store transaction file 50 from, for example, a transaction information file for one week.

The analysis server 20 is explained.

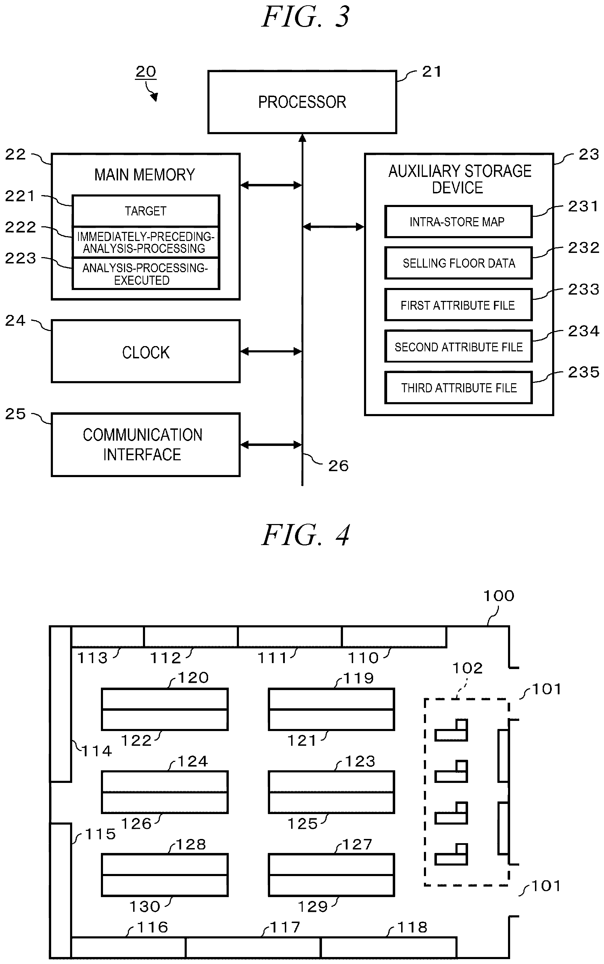

FIG. 3 is a block diagram illustrating a main part circuit configuration of the analysis server 20. The analysis server 20 includes a processor 21, a main memory 22, an auxiliary storage device 23, a clock 24, a communication interface 25, and a system transmission path 26. The processor 21, the main memory 22, the auxiliary storage device 23, the clock 24, and the communication interface 25 are respectively connected to the system transmission path 26. The system transmission path 26 includes an address bus, a data bus, and a control signal line. In the analysis server 20, the processor 21, the main memory 22, and the auxiliary storage device 23 are connected by the system transmission path 26 to configure a computer that performs information processing for controlling the analysis server 20.

The processor 21 is equivalent to a central part of the computer. The processor 21 controls the units according to an operating system or application programs in order to realize various functions of the analysis server 20. The processor 21 is, for example, a CPU (Central Processing Unit).

The main memory 22 is equivalent to a main storage part of the computer. The main memory 22 includes a nonvolatile memory region and a volatile memory region. The main memory 22 stores the operating system or the application programs in the nonvolatile memory region. The main memory 22 stores, in the volatile memory region, data necessary for the processor 21 to execute processing for controlling the units. The main memory 22 uses the volatile memory region as a work area where data is rewritten as appropriate by the processor 21. The nonvolatile memory region is, for example, a ROM (Read Only Memory). The volatile memory region is, for example, a RAM (Random Access Memory).

The auxiliary storage device 23 is equivalent to an auxiliary storage part of the computer. As the auxiliary storage device 23, a well-known storage device such as an EEPROM (Electric Erasable Programable Read-Only Memory), a HDD (Hard Disc Drive), or an SSD (Solid State Drive) is used alone or a plurality thereof are used in combination. The auxiliary storage device 23 saves data used by the processor 21 in performing various kinds of processing and data generated by processing in the processor 21. The auxiliary storage device 23 sometime stores the application programs.

The clock 24 functions as a time information source of the analysis server 20. The processor 21 clocks present date and time based on time information clocked by the clock 24.

The communication interface 25 is a circuit for performing data communication with the communication server 13 of the store system 10 connected via the communication network 30.

The analysis server 20 having such a configuration functions as an information collection apparatus that collects information necessary for an attribute analysis for a commodity. Accordingly, the analysis server 20 uses a part of a storage region of the auxiliary storage device 23 as regions of an intra-store map memory 231, a selling floor data memory 232, a first attribute file 233, a second attribute file 234, and a third attribute file 235.

In the intra-store map memory 231, map data representing a selling floor plan of the store in which the store system 10 is constructed is stored.

FIG. 4 is a schematic diagram illustrating an example of the selling floor plan specified by the map data. As illustrated in FIG. 4, in a store 100, an accounting place 102 is disposed near an entrance 101 and the other area is used as a selling floor region. The selling floor region is divided into selling floors 110 to 130 for each of classifications of commodities. Display shelves or display cases are set in the selling floors 110 to 130. Commodities belonging to the classifications of the selling floors are displayed in the display shelves or display cases.

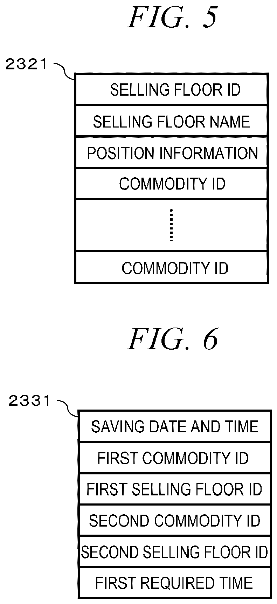

In the selling floor data memory 232, a selling floor record 2321 (see FIG. 5) created for each of the selling floors 110 to 130 is stored.

FIG. 5 is a schematic diagram illustrating data structure of the selling floor record 2321. The selling floor record 2321 includes a selling floor ID, a selling floor name, position information, and a commodity ID list. The selling floor ID is a unique code set for each of the selling floors 110 to 130 in order to identify the selling floors 110 to 130. The selling floor name is a name set for each of the selling floors 110 to 130. The position information is information indicating the positions of the selling floors 110 to 130 in the selling floor region. For example, the selling floor region is represented as a two-dimensional orthogonal plane having any one part as the origin. X-Y coordinates of, for example, center points of the selling floors 110 to 130 in the orthogonal plane are calculated and set as position information. The commodity ID list is a commodity ID group of commodities displayed in the selling floors 110 to 130.

In the first attribute file 233, a first attribute record 2331 (see FIG. 6) obtained by analyzing the data of the store transaction file 50 is stored.

FIG. 6 is a schematic diagram illustrating data structure of the first attribute record 2331. The first attribute record 2331 includes a saving date and time, a first commodity ID, a first selling floor ID, a second commodity ID, a second selling floor ID, and a first required time. The saving date and time, the first commodity ID, the first selling floor ID, the second commodity ID, the second selling floor ID, and the first required time are clarified in operation explanation below.

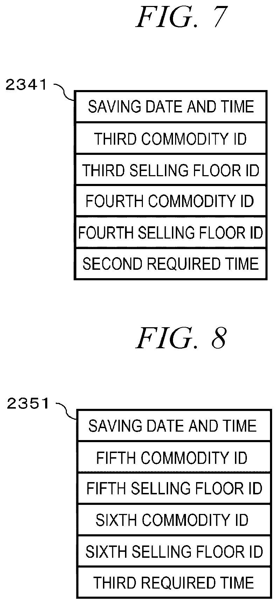

In the second attribute file 234, a second attribute record 2341 (see FIG. 7) obtained by analyzing the data of the store transaction file 50 is stored.

FIG. 7 is a schematic diagram illustrating data structure of the second attribute record 2341. The second attribute record 2341 includes a saving date and time, a third commodity ID, a third selling floor ID, a fourth commodity ID, a fourth selling floor ID, and a second required time. The saving date and time, the third commodity ID, the third selling floor ID, the fourth commodity ID, the fourth settling floor ID, and the second required time are explained in the operation explanation below.

In the third attribute file 235, a third attribute record 2351 (see FIG. 8) obtained by analyzing the data of the store transaction file 50 is stored.

FIG. 8 is a schematic diagram illustrating data structure of the third attribute record 2351. The third attribute record 2351 includes a saving date and time, a fifth commodity ID, a fifth selling floor ID, a sixth commodity ID, a sixth selling floor ID, and a third required time. The saving date and time, the fifth commodity ID, the fifth selling floor ID, the sixth commodity ID, the sixth selling floor ID, and the third required time are clarified in the operation explanation below.

In order to function as the information collection apparatus, the analysis server 20 forms regions of a target memory 221, an immediately-preceding-analysis-processing memory 222, and an analysis-processing-executed memory 223 in the nonvolatile memory region in the main memory 22. The target memory 221 and the immediately-preceding-analysis-processing memory 222 include regions for storing one store transaction record. The analysis-processing-executed memory 223 includes a region for storing a plurality of store transaction records.

Further, in order to function as the information collection apparatus, the analysis server 20 stores a control program. The control program is a type of an application program. The control program is installed in the main memory 22 or the auxiliary storage device 23. A method of installing the control program in the main memory 22 or the auxiliary storage device 23 is not particularly limited. The control program can be installed in the main memory 22 or the auxiliary storage device 23 by being recorded in a removable recording medium or being distributed by communication via a network. A form of the recording medium may be any form if the recording medium can store a program like a CD-ROM, a memory card, and the like and a device can read the recording medium.

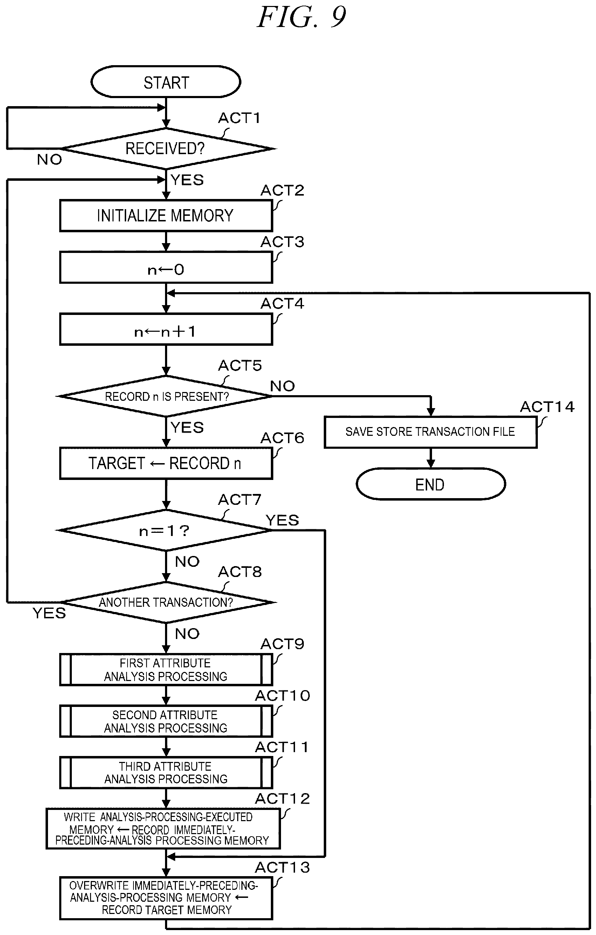

FIGS. 9 to 12 are flowcharts illustrating a main part procedure of information processing executed by the processor 21 of the analysis server 20 according to the control program. The operation of the information processing apparatus is explained below with reference to the flowcharts. The operation explained below is an example. If the same result is obtained, a procedure and the like of the operation are not particularly limited.

As illustrated in FIG. 9, in ACT 1, the processor 21 waits for reception of the store transaction file 50. If receiving the store transaction file 50 via the communication interface 25, the processor 21 determines YES in ACT 1 and proceeds to ACT 2. In ACT 2, the processor 21 clears the immediately-preceding-analysis-processing memory 222 and the analysis-processing-executed memory 223. In ACT 3, the processor 21 resets a record counter n to "0". The record counter n is formed in, for example, a volatile memory region of the main memory 22.

In ACT 4, the processor 21 counts up the record counter n by "1". In ACT 5, the processor 21 confirms whether a store transaction record having the record counter n as a record number is saved in the store transaction file 50. In the following explanation, the store transaction record having the record counter n as the record number is represented as a store transaction record n. If the store transaction record n is saved in the store transaction file 50, in ACT 6, the processor 21 overwrites the store transaction record n in the target memory 221.

In ACT 7, the processor 21 confirms whether the record counter n is "1". At this point in time, the record counter n is "1", that is, the store transaction record n is a record saved at the head of the store transaction file 50.

If the record counter n is "1", the processor 21 determines YES in ACT 7 and proceeds to ACT 13. In ACT 13, the processor 21 overwrites the store transaction record n, which is stored in the target memory 221, in the immediately-preceding-analysis-processing memory 222. The processor 21 returns to ACT 4. That is, in ACT 4, the processor 21 further counts up the record counter n by "1". In ACT 5, the processor 21 confirms whether the store transaction record n is saved in the store transaction file 50. If the store transaction record n is saved in the store transaction file 50, in ACT 6, the processor 21 overwrites the store transaction record n in the target memory 221.

The processor 21 executes the processing in ACT 4 to ACT 6 to thereby function as an acquiring unit. That is, the processor 21 acquires identification information of commodities registered by the same customer in the selling floor together with times when the commodities are registered.

In ACT 7, the processor 21 confirms whether the record counter n is "1". At this point in time, the record counter n exceeds "1". That is, in the immediately-preceding-analysis-processing memory 222, a store transaction record (n-1) saved in the store transaction file 50 immediately before the store transaction record n stored in the target memory 221 is stored. If the record counter n exceeds "1", the processor 21 determines NO in ACT 7 and proceeds to ACT 8.

In ACT 8, the processor 21 confirms whether the store transaction record n is a record of a transaction different from a transaction of the store transaction record (n-1). That is, the processor 21 confirms whether a store ID and a transaction number of the store transaction record n coincide with a store ID and a transaction number of the store transaction record (n-1). If the store IDs and the transaction numbers coincide, the processor 21 recognizes that the store transaction record n is a record of the same transaction as the transaction of the store transaction record (n-1). On the other hand, if the store IDs and the transaction numbers do not coincide, the processor 21 recognizes that the store transaction record n is a record of a transaction different from the transaction of the store transaction record (n-1).

If recognizing that the store transaction record n is the record of the same transaction, the processor 21 determines NO in ACT 8 and proceeds to ACT 9. In ACT 9, the processor 21 executes first attribute analysis processing. In ACT 10, the processor 21 executes second attribute analysis processing. Further, in ACT 11, the processor 21 executes third attribute analysis processing. Specific procedures of the first attribute analysis processing, the second attribute analysis processing, and the third attribute analysis processing are explained below.

If finishing executing the first attribute analysis processing, the second attribute analysis processing, and the third attribute analysis processing, in ACT 12, the processor 21 writes the store transaction record (n-1) of the immediately-preceding-analysis-processing memory 22 in the analysis-processing-executed memory 223. Thereafter, the processor 21 proceeds to ACT 13. That is, the processor 21 overwrites the store transaction record n, which is stored in the target memory 221, in the immediately-preceding-analysis-processing memory 222. The processor 21 returns to ACT 4.

In this way, the processor 21 acquires the store transaction records of the store transaction file 50 in ascending order of the record numbers. The acquired store transaction record is temporarily stored in the target memory 221. A store transaction record acquired immediately before the store transaction record is temporarily stored in the immediately-preceding-analysis-processing memory 222. If the store transaction record stored in the target memory 221 is a record of the same transaction as a transaction of the store transaction record stored in the immediately-preceding-analysis-processing memory 222, the processor 21 executes the analysis processing in ACT 9 to ACT 11. Every time the analysis processing is finished, the store transaction record stored in the immediately-preceding-analysis-processing memory 222 is accumulated in the analysis-processing-executed memory 223. The store transaction record stored in the target memory 221 is transferred to the immediately-preceding-analysis-processing memory 222.

On the hand, if the store transaction record stored in the target memory 221 is a record of a transaction different from the transaction of the store transaction record stored in the immediately-preceding-analysis-processing memory 222, the processor 21 determines YES in ACT 8 and returns to ACT 2. That is, the processor 21 clears the target memory 221, the immediately-preceding-analysis-processing memory 222, and the analysis-processing-executed memory 223. The processor 21 resets the record counter n to "0". The processor 21 executes the processing in ACT 4 and subsequent acts in the same manner as explained above.

If finishing executing the processing for all the store transaction records saved in the store transaction file 50, the processor 21 determines NO in ACT 5 and proceeds to ACT 14. In ACT 14, the processor 21 saves the store transaction file 50 in the auxiliary storage device 23. Consequently, the processor 21 ends the processing at the time when the store transaction file 50 is received.

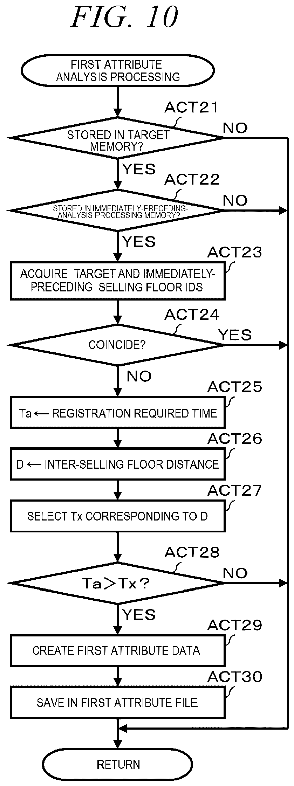

FIG. 10 is a flowchart specifically illustrating a procedure of the first attribute analysis processing. If entering the first attribute analysis processing, in ACT 21, the processor 21 confirms whether the store transaction record n stored in the target memory 221 is a record having registration time. If the store transaction record n is a record having commodity return time, the processor 21 determines NO in ACT 21. The processor 21 ends the first attribute analysis processing.

If the store transaction record n is a record having registration time, the processor 21 determines YES in ACT 21 and proceeds to ACT 22. In ACT 22, the processor 21 confirms whether the store transaction record (n-1) stored in the immediately-preceding-analysis-processing memory 222 is a record having registration time. If the store transaction record (n-1) is a record having commodity return time, the processor 21 determines NO in ACT 222. The processor 21 ends the first attribute analysis processing.

If the store transaction record (n-1) is a record having registration time, the processor 21 determines YES in ACT 22 and proceeds to ACT 23. In ACT 23, the processor 21 refers to the selling floor data memory 232. The processor 21 acquires a selling floor ID of the selling floor record 2321 including a commodity ID of the store transaction record n and a selling floor ID of the selling floor record 2321 including a commodity ID of the store transaction record (n-1).

In ACT 24, the processor 21 confirms whether both the selling floor IDs coincide. If a commodity identified by the commodity ID of the store transaction record n and a commodity identified by the commodity ID of the store transaction record (n-1) are sold in the same selling floor, both the selling floor IDs coincide. In that case, the processor 21 determines YES in ACT 24 and eds the first attribute analysis processing. In the following explanation, the commodity identified by the commodity ID of the store transaction record n is referred to as target commodity. The commodity identified by the commodity ID of the store transaction record (n-1) is referred to as immediately preceding commodity.

If the target commodity and the immediately preceding commodity are sold in different selling floors, both the selling floor IDs do not coincide. In that case, the processor 21 determines NO in ACT 24 and proceeds to ACT 25. In ACT 25, the processor 21 calculates a required time for registration Ta from when the immediately preceding commodity is registered until when the target commodity is registered. Specifically, the processor 21 calculates, as the required time for registration Ta, an elapsed time from registration time of the store transaction record stored in the immediately-preceding-analysis-processing memory 222 until registration time of the store transaction record stored in the target memory 221.

ACT 26, the processor 21 calculates an inter-selling floor distance D from a selling floor of the immediately preceding commodity to a selling floor of the target commodity. Specifically, the processor 21 acquires position information of the selling floor record 2321 including the commodity ID of the store transaction record n and position information of the selling floor record 2321 including the commodity ID of the store transaction record (n-1). The processor 21 calculates, according to the position information and the map data stored in the intra-store map memory 231, as the inter-selling floor distance D, a distance of a passage leading from the selling floor of the immediately preceding commodity to the selling floor of the target commodity.

In ACT 27, the processor 21 selects a threshold time Tx corresponding to the inter-selling floor distance D. The analysis server 20 includes a data table in which the threshold time Tx is set to be correlated with various inter-selling floor distances D. The threshold time Tx is a time obtained by adding a sufficient time required by a customer moving to a selling floor to find a commodity to purchase to a sufficient time required for the customer to move the corresponding inter selling-floor distance D. The threshold time Tx is determined by statistically processing various elements such as a layout of the store, the width of the passage, a congestion degree of customers, and a clientele.

In ACT 28, the processor 21 confirms whether the required time for registration Ta is longer than the threshold time Tx. If the required time for registration Ta is equal to or shorter than the threshold time Tx, the processor 21 determines NO in ACT 28 and ends the first attribute analysis processing.

If the required time for registration Ta is longer than the threshold time Tx, the processor 21 determines YES in ACT 28 and proceeds to ACT 29. In ACT 29, the processor 21 generates the first attribute record 2331. That is, the processor 21 sets a date and time clocked by the clock 24 as a saving date and time. The processor 21 sets a commodity ID of the immediately preceding commodity as a first commodity ID. The processor 21 sets a selling floor ID of the immediately preceding commodity as a first selling floor ID. The processor 21 sets a commodity ID of the target commodity as a second commodity ID. The processor 21 sets a selling floor ID of the target commodity as a second selling floor ID. The processor 21 sets the required time for registration Ta as a first required time. Accordingly, the processor 21 generates the first attribute record 2331 according to the saving date and time, the first commodity ID, the first selling floor ID, the second commodity ID, the second selling floor ID, and the first required time Ta.

In ACT 30, the processor 21 saves the first attribute record 2331 in the first attribute file 233. Consequently, the processor 21 ends the first attribute analysis processing.

The processor 21 executing the first attribute analysis processing functions as a recognizing unit, a specifying unit, a detecting unit (detector),, and a collecting unit. That is, the processor 21 recognizes, from identification information of commodities registered by the same customer in the selling floor and times when the commodities are registered, registration order of the commodities by the same customer and a required time until the registration, that is, the required time for registration Ta (ACT 21 to ACT 25). The processor 21 specifies selling floors of the commodities (ACT 23). The processor 21 detects a commodity, the required time for registration Ta of which exceeds the threshold time Tx corresponding to the inter-selling floor distance D (ACT 26 to ACT 28). The processor 21 generates the first attribute record 2331 as information necessary for an attribute analysis for the detected commodity and saves the first attribute record 2331 in the first attribute file 233 to collect the first attribute record 2331 (ACT 29 to ACT 30).

In this way, the analysis server 20 detects an event in which a time required by the customer moving from another selling floor to a selling floor of a purchase target commodity and registering the purchase target commodity by himself or herself is longer than the threshold time Tx. The analysis server 20 collects information relating to this event in the first attribute file 233 as the first attribute record 2331. Such an event mainly occurs if it is hard for the customer to find a purchase target commodity. That is, the information collected in the first attribute file 233 is considered to be information necessary for an attribute analysis of a commodity having an attribute that it is hard for a customer to find the commodity.

Therefore, the analysis server 20 can specify, by analyzing the information collected in the first attribute file 233, the commodity having the attribute that it is hard for the customer to find the commodity.

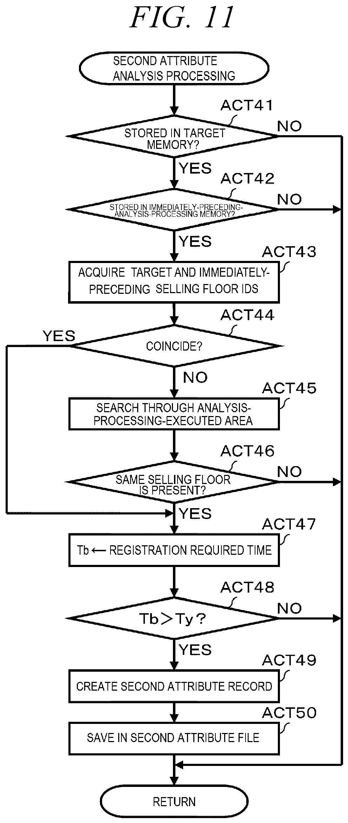

FIG. 11 is a flowchart specifically illustrating a procedure of the second attribute analysis processing. If entering the second attribute analysis processing, in ACT 41, the processor 21 confirms whether the store transaction record n stored in the target memory 221 is a record having registration time. If the store transaction record n is a record having commodity return time, the processor 21 determines NO in ACT 41. The processor 21 ends the second attribute analysis processing.

If the store transaction record n is a record having registration time, the processor 21 determines YES in ACT 41 and proceeds to ACT 42. In ACT 42, the processor 21 confirms whether the store transaction record (n-1) stored in the immediately-preceding-analysis-processing memory 222 is a record having registration time. If the store transaction record (n-1) is a record having commodity return time, the processor 21 determines NO in ACT 42. The processor 21 ends the second attribute analysis processing.

If the store transaction record (n-1) is a record having registration time, the processor 21 determines YES in ACT 42 and proceeds to ACT 43. In ACT 43, the processor 21 refers to the selling floor data memory 232. The processor 21 acquires a selling floor ID of the selling floor record 2321 including the commodity ID of the store transaction record n and a selling floor ID of the selling floor record 2321 including the commodity ID of the store transaction record (n-1).

In ACT 44, the processor 21 confirms whether both the selling floor IDs coincide. If the target commodity and the immediately preceding commodity are sold in the same selling floor, both the selling floor IDs coincide. In that case, the processor 21 determines YES in ACT 44 and proceeds to ACT 47. Processing in ACT 47 and subsequent acts is explained below.

If the target commodity and the immediately preceding commodity are sold in different selling floors, both the selling floor IDs do not coincide. In that case, the processor 21 determines NO in ACT 44 and proceeds to ACT 45. In ACT 45, the processor 21 searches through the analysis-processing-executed memory 223. In ACT 46, the processor 21 confirms whether a store transaction record of a commodity sold in the same selling floor as the selling floor of the target commodity is saved in the analysis-processing-executed memory 223. That is, the processor 21 detects, from the selling floor data memory 232, in descending order of registration times, selling floor IDs of the selling floor record 2321 including the commodity ID of the store transaction record saved in the analysis-processing-executed memory 223. If a selling floor ID coinciding with the selling floor ID of the target commodity is detected, the processor 21 recognizes that the store transaction record of the commodity sold in the same selling floor as the selling floor of the target commodity is saved in the analysis-processing-executed memory 223. If the store transaction record is not saved in the analysis-processing-executed memory 223, the processor 21 determines NO in ACT 46 and ends the second attribute analysis processing.

If the store transaction record of the commodity sold in the same selling floor as the selling floor of the target commodity is saved in the analysis-processing-executed memory 223, the processor 21 determines YES in ACT 46 and proceeds to ACT 47. In this way, if the target commodity and the immediately preceding commodity are sold in the same selling floor or if the commodity sold in the same selling floor as the selling floor of the target commodity is already registered, the processor 21 proceeds to ACT 47. In the following explanation, the registered commodity sold in the same selling floor as the selling floor of the target commodity is referred to as registered commodity.

In ACT 47, the processor 21 calculates, as in the processing in ACT 25, a required time for registration Tb from when the immediately preceding commodity or the registered commodity is registered until when the target commodity is registered. In ACT 48, the processor 21 confirms whether the required time for registration Tb exceeds a threshold time Ty. The threshold time Ty is a time sufficient for assuming that a customer wonders whether to purchase a commodity. The threshold time Ty is determined based on the rule of thumb. If the required time for registration Tb is equal to or shorter than the threshold time Ty, the processor 21 determines NO in ACT 48 and ends the second attribute analysis processing.

If the required time for registration Tb is longer than the threshold time Ty, the processor 21 determines YES in ACT 48 and proceeds to ACT 49. In ACT 49, the processor 21 generates the second attribute record 2341. That is, the processor 21 sets a date and time clocked by the clock 24 as a saving date and time. The processor 21 sets a commodity ID of the immediately preceding commodity or the registered commodity as a third commodity ID. The processor 21 sets the selling floor ID of the immediately preceding commodity or the registered commodity as a third selling floor ID. The processor 21 sets the commodity ID of the target commodity as a fourth commodity ID. The processor 21 sets the selling floor ID of the target commodity as a fourth selling floor ID. The processor 21 sets the required time for registration Tb as a second required time. Accordingly, the processor 21 generates the second attribute record 2341 according to the saving date and time, the third commodity ID, the third floor ID, the fourth commodity ID, the fourth selling floor ID, and the second required time Tb.

In ACT 50, the processor 21 saves the second attribute record 2341 in the second attribute file 234. Consequently, the processor 21 ends the second attribute analysis processing.

The processor 21 that executes the second attribute analysis processing functions as a recognizing unit, a specifying unit, a detecting unit, and a collecting unit. That is, the processor 21 recognizes, from identification information of commodities registered by the same customer in the selling floor and times when the commodities are registered, a time required until registration of two commodities sold in the same floor by the same customer, that is, the required time for registration Tb (ACT 41 to ACT 45). The processor 21 specifies selling floors of the commodities (ACT 43). The processor 21 detects a commodity, the required time for registration Tb of which exceeds the threshold time Ty (ACT 48). The processor 21 generates the second attribute record 2341 as information necessary for an attribute analysis of the detected commodity and saves the second attribute record 2341 in the second attribute file 234 to collect the second attribute record 2341 (ACT 49 to ACT 50).

In this way, the analysis server 20 detects an event in which the customer registers two commodities sold in the same floor by himself or herself while taking a longer time than the threshold time Ty. The analysis server 20 collects the information relating to this event in the second attribute file 234 as the second attribute record 2341. Such an event mainly occurs if the customer wonders whether to purchase a purchased commodity in the same floor later. That is, the information collected in the second attribute file 234 is considered to be information necessary for an attribute analysis of a commodity having an attribute that the customer tends to wonder whether to purchase the commodity.

Therefore, the analysis server 20 can specify, by analyzing the information collected in the second attribute file 234, the commodity having the attribute that the customer tends to wonder whether to purchase the commodity.

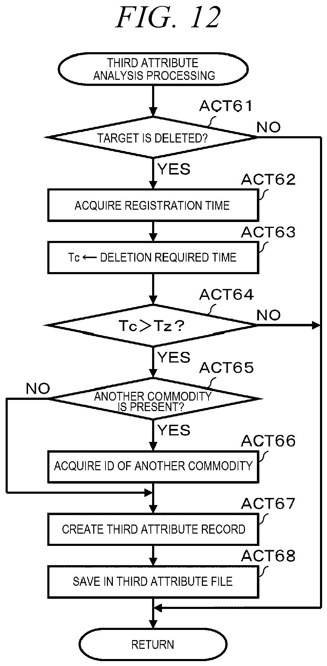

FIG. 12 is a flowchart specifically illustrating a procedure of the third attribute analysis processing. If entering the third attribute analysis processing, in ACT 61, the processor 21 confirms whether the store transaction record stored in the target memory 221 is a record having deletion time. If the store transaction record is a record having registration time, the processor 21 determines NO in ACT 61 and ends the third attribute analysis processing.

If the store transaction record is a record having deletion time, the processor 21 determines YES in ACT 61 and proceeds to ACT 62. In ACT 62, the processor 21 acquires registration time of the target commodity. That is, the processor 21 searches through the immediately-preceding-analysis-processing memory 222 or the analysis-processing-executed memory 223 and finds a store transaction record including the same commodity ID as the commodity ID of the target commodity and having registration time. The processor 21 acquires the registration time of the store transaction record as registration time of the target commodity.

In ACT 63, the processor 21 calculates, as a required time for deletion Tc, an elapsed time from the registration time to deletion time of the target commodity. In ACT 64, the processor 21 confirms whether the required time for deletion Tc exceeds a threshold time Tz. The threshold time Tz is a time sufficient for assuming whether the customer is wondering whether to return a commodity. The threshold time Tz is determined based on the rule of thumb. If the required time for deletion Tc is equal to or shorter than the threshold time Tz, the processor 21 determines NO in ACT 64 and ends the third attribute analysis processing.

If the required time for deletion Tc exceeds the threshold time Tz, the processor 21 determines YES in ACT 64 and proceeds to ACT 65. In ACT 65, the processor 21 confirms whether the customer purchased another commodity from when the customer purchased the target commodity until when the customer returned the target commodity. That is, the processor 21 confirms whether the registration time of the target commodity is acquired from the store transaction record of the immediately-preceding-analysis-processing memory 222. If the registration time of the target commodity is acquired from the store transaction record of the immediately-preceding-analysis-processing memory 222, the processor 21 determines that the customer did not purchase another commodity. In that case, the processor 21 determines NO in ACT 65 and proceeds to ACT 67.

On the other hand, if the registration time of the target commodity is acquired from the store transaction record of the analysis-processing-executed memory 223, the processor 21 determines that the customer purchased another commodity. In that case, the processor 21 determines YES in ACT 65 and proceeds to ACT 66. In ACT 66, the processor 21 acquires a commodity ID and a selling floor ID of the other commodity. If a plurality of other commodities are present, the processor 21 acquires commodity IDs and selling floor IDs of the respective commodities. Thereafter, the processor 21 proceeds to ACT 67.

In this way, if another commodity is not registered from when the target commodity is registered until when the target commodity is returned, the processor 21 skips the processing in ACT 66 and proceeds to ACT 67. On the other hand, if other commodities are registered from when the target commodity is registered until when the target commodity is returned, in ACT 66, the processor 21 acquires all of commodity IDs and selling floor IDs of the other commodities and proceeds to ACT 67.

In ACT 67, the processor 21 generates the third attribute record 2351. That is, the processor 21 sets a date and time clocked by the clock 24 as the saving date and time. The processor 21 sets the commodity ID of the target commodity as the fifth commodity ID. The processor 21 sets the selling floor ID of the target commodity as the fifth selling floor ID. If a commodity ID and a selling floor ID of another commodity are acquired, the processor 21 sets the commodity ID as the sixth commodity ID and sets the selling floor ID as the sixth selling floor ID. If a commodity ID and a selling floor ID of another commodity are not acquired, the processor 21 sets both of the sixth commodity ID and the sixth selling floor ID to NULL values. The processor 21 sets the required time for deletion Tc as the third required time. Accordingly, the processor 21 generates the third attribute record according to the saving date and time, the fifth commodity ID, the fifth selling floor ID, the sixth commodity ID, the sixth selling floor ID, and the third required time Tc.

In ACT 68, the processor 21 saves the third attribute record 2351 in the third attribute file 235. Consequently, the processor 21 ends the third attribute analysis processing.

The processor 21 that executes the third attribute analysis processing functions as a recognizing unit, a detecting unit, and a collecting unit. That is, the processor 21 recognizes, from identification information of commodities registered by the same customer in the selling floor and registration times of the commodities and identification information of a returned commodity and commodity return time of the commodity, a time required until the commodity is returned, that is, a required time for commodity return Tc (ACT 61 to ACT 63). The processor 21 detects a commodity, the required time for commodity return Tc of which exceeds the threshold time Tz (ACT 64). The processor 21 confirms whether another commodity is purchased before the commodity is returned (ACT 65 to ACT 66). Accordingly, the processor 21 generates the third attribute record 2351 as information necessary for an attribute analysis of a detected commodity and saves the third attribute record 2351 in the third attribute file 235 to collect the third attribute record 2351 (ACT 67 to ACT 68).

In this way, the analysis server 20 detects an event in which the customer returns a once-purchased commodity to the original selling floor while taking a longer time than the threshold time Tz. The analysis server 20 collects information relating to the event in the third attribute file 235 as the third attribute record 2351. Such an event mainly occurs if the customer wonders whether to purchase a once-registered commodity and finally does not purchase the commodity. That is, the information collected in the third attribute file 235 is considered to be information necessary for an attribute analysis of a commodity having an attribute that the customer wonders whether to purchase the commodity and finally does not purchase the commodity.

If the customer purchased another commodity before returning a commodity, the analysis server 20 collects information concerning the commodity and the other commodity in the third attribute file 235. Such an event occurs if the customer returns a once-registered commodity because the customer finds another commodity better than the once-registered commodity. That is, the information collected in the third attribute file 235 is considered to be information necessary for an attribute analysis of, in addition to the commodity having the attribute that the customer wonders whether to purchase the commodity and finally does not purchase the commodity, a commodity having an attribute that the customer purchases the commodity as a substitute for the commodity.

Therefore, by analyzing the information collected in the third attribute file 235, the analysis server 20 can specify the commodity having the attribute that the customer wonders whether to purchase the commodity and finally does not purchase the commodity and the commodity having the attribute that the purchaser purchases the commodity as a substitute for the commodity.

As explained above, according to this embodiment, it is possible to collect, directly using the store system 10 in which a customer registers a purchased commodity by himself or herself in the selling floor, information necessary for an attribute analysis of a commodity having an attribute that it is hard for the customer to find the commodity and an attribute that the customer tends to wonder whether to purchase the commodity. Therefore, since a system such as a camera or a beacon necessary for a traffic line analysis for the customer is unnecessary, it is possible to reduce initial cost and running cost. Since a system for analyzing an image or a signal is also unnecessary, it is possible to realize the store system 10 at low cost.

The embodiment of the information collection apparatus is explained above. However, such an embodiment is not limited to this.

In the embodiment, the store system 10 is illustrated in which the smartphones, the tablet terminals, or the like carried by the customers are used as the user terminals 40. Another embodiment may be the store system 10 in which cart terminals attached to shopping carts are used as user terminals. Alternatively, another embodiment may be the store system 10 that tracks actions of a customer in the store and, if recognizing an action of taking out a commodity from a commodity shelf, registers a purchased commodity. In this case, the user terminal 40 is unnecessary.

In the first attribute analysis processing, the processing in ACT 24 may be omitted. That is, if the required time for registration Ta for commodities sold in the same selling floor exceeds the threshold time Tx, the processor 21 may generate the first attribute record 2331 and save the first attribute record 2331 in the first attribute file 233. In this case, since an inter-selling floor distance is "0", the threshold time Tx is a sufficient time required by the customer to find a purchased commodity. According to such an embodiment, it is possible to collect information necessary for an attribute analysis for a commodity having an attribute that it is hard to find even commodities displayed on the same shelf.

Order in which the processor 21 executes the first attribute analysis processing, the second attribute analysis processing, and the third attribute analysis processing is not particularly limited. Not all of the first attribute analysis processing, the second attribute analysis processing, and the third attribute analysis processing have to be executed. Analysis processing that can collect information necessary for an analysis only has to be executed.

In the embodiment, as an example, the analysis server 20 has the function of the information collection apparatus. Concerning this point, for example, the store server 12 may have the function of the information collection apparatus. In this case, the store server 12 is capable of performing the same analysis as the analysis in the embodiment by transmitting the first attribute file 233, the second attribute file 234, and the third attribute file 235 to the analysis server 20 via the communication server 13.

Besides, the several embodiments are explained above. However, the embodiments are presented as examples and are not intended to limit the scope of the invention. These new embodiments can be implemented in other various forms. Various omissions, substitutions, and changes can be made without departing from the spirit of the invention. These embodiments and modifications of the embodiments are included in the scope and the gist of the invention and included in the inventions described in claims and the scope of equivalents of the inventions.

## Claims

1. An information collection apparatus, comprising:
an acquiring unit configured to acquire identification information of commodities registered by a customer in a selling floor and times when the commodities are registered;
a recognizing unit configured to recognize, from the identification information and the registration times of the commodities acquired by the acquiring unit, a registration order of the commodities by the customer and a required time until a registration;
a detector configured to detect, based on the registration order of the commodities by the customer and the required time until the registration recognized by the recognizing unit, a commodity having a predetermined attribute; and
a collecting unit configured to collect information necessary for an attribute analysis for the commodity detected by the detector.

2. The information collection apparatus according to claim 1, wherein the detector detects, as the commodity having the predetermined attribute, a commodity registered exceeding a predetermined time after an immediately preceding commodity is registered.

3. The information collection apparatus according to claim 2, further comprising:
a specifying unit configured to specify allocation in the selling floor of a commodity, wherein
if the location of the selling floor of the commodity registered exceeding the predetermined time is different from a location of the selling floor of the immediately preceding commodity, the detector detects the commodity as the commodity having the predetermined attribute.

4. The information collection apparatus according to any one of claims 1 to 3, further comprising:
a specifying unit configured to specify allocation of the selling floor of a commodity, wherein
the detector detects, as the commodity having the predetermined attribute, a commodity registered exceeding a predetermined time after a commodity in the location of the selling floor is registered.

5. The information collection apparatus according to any one of claims 1 to 4, wherein
the acquiring unit further acquires identification information of a commodity returned to the selling floor together with a time when the commodity is returned, and
the detector detects, as the commodity having the predetermined attribute, a commodity returned exceeding a predetermined time after the commodity is registered by the customer.

6. The information collection apparatus according to any one of claims 1 to 5, wherein
the identification information comprises one or more of a commodity ID, a unit price, and a number of returned items.

7. The information collection apparatus according to any one of claims 1 to 6, with the proviso that the detector is not a camera.

8. An information collection method, comprising:
acquiring identification information of commodities registered by a customer in a selling floor and times when the commodities are registered;
recognizing, from the identification information and the registration times of the acquired commodities by acquiring, a registration order of the commodities by the customer and a required time until a registration;
detecting, based on the recognized registration order of the commodities by the customer and the recognized required time until the registration, a commodity having a predetermined attribute; and
collecting information necessary for an attribute analysis for the detected commodity by detecting.

9. The information collection method according to claim 8, further comprising:
detecting, as the commodity having the predetermined attribute, a commodity registered exceeding a predetermined time after an immediately preceding commodity is registered.

10. The information collection method according to claim 9, further comprising:
specifying allocation in the selling floor of a commodity; and
if the location of the selling floor of the commodity registered exceeding the predetermined time is different from a location of the selling floor of the immediately preceding commodity, detecting the commodity as the commodity having the predetermined attribute.

11. The information collection method according to any one of claims 8 to 10, further comprising:
specifying allocation of the selling floor of a commodity; and
detecting, as the commodity having the predetermined attribute, a commodity registered exceeding a predetermined time after a commodity in the location of the selling floor is registered.

12. The information collection method according to any one of claims 8 to 11, further comprising:
acquiring identification information of a commodity returned to the selling floor together with a time when the commodity is returned; and
detecting, as the commodity having the predetermined attribute, a commodity returned exceeding a predetermined time after the commodity is registered by the customer.

13. The information collection method according to any one of claims 8 to 12, wherein
the identification information comprises one or more of a commodity ID, a unit price, and a number of returned items.

14. An information collection system, comprising:
a memory that stores functional components; and
a processor that executes the functional components stored in the memory, wherein the functional components comprise:
an acquiring unit configured to acquire identification information of commodities registered by a customer in a selling floor and times when the commodities are registered;
a recognizing unit configured to recognize, from the identification information and the registration times of the commodities acquired by the acquiring unit, a registration order of the commodities by the customer and a required time until a registration;
a detector configured to detect, based on the registration order of the commodities by the customer and the required time until the registration recognized by the recognizing unit, a commodity having a predetermined attribute; and
a collecting unit configured to collect information necessary for an attribute analysis for the commodity detected by the detector.

15. The information collection system according to claim 14, wherein the detector detects, as the commodity having the predetermined attribute, a commodity registered exceeding a predetermined time after an immediately preceding commodity is registered.
